# EUROPEAN PATENT APPLICATION

(11) **EP 2 922 349 A1**
(43) Date of publication of application: **23.09.2015**
(21) Application number: 13855311.0
(22) Date of filing: 03.04.2013
(51) Int. Cl.: H04W 48/18

(54) **METHOD AND CONTROLLER FOR IMPLEMENTING WIRELESS NETWORK CLOUD**

(30) Priority: 14.11.2012 CN 201210459047
(71) Applicant: Boomsense Technology Co. Ltd., Beijing 100048 (CN)
(72) Inventor: LIU, Jianjun, Beijing 100048 (CN); ZHAO, Yueming, Beijing 100048 (CN)
(74) Representative: Hewett, Jonathan Michael Richard
(86) International application number: PCT/CN2013/000388
(87) International publication number: WO 2014/075375

(57) **Abstract**

The invention discloses a method and a controller for implementing a network cloud. The method comprises: generating, according to user identity information pre-entered and stored in a user information table, a bound second network interconnection protocol IP address and second virtual local area network VLAN tag in one-to-one correspondence with the identity information; acquiring a connection request sent by a wireless terminal, and connecting to the wireless terminal according to the connection request; allocating a first IP address and a first VLAN tag to the wireless terminal; receiving user authentication information sent by the wireless terminal through the first IP address, and authenticating the user authentication information according to the user identity information in the user information table; allocating the second VLAN tag to the wireless terminal when the identity authentication is completed, and allocating the second IP address to the wireless terminal according to a secondary allocation request sent by the wireless terminal when the lease time of the first IP address expires, so that the wireless terminal performs wireless connection according to the second IP address and the second VLAN. By adopting the method disclosed by the invention, users having physical addresses not on the same LAN in a wireless network but having a same VLAN tag are enabled to log in the same network corresponding to the VLAN tag through the identity information, to achieve continuation of data.

## Description

The present application claims priority of Chinese patent application No. 201210459047.5, entitled "method and controller for implementing wireless network cloud" filed with Chinese Patent Office on November 14, 2012, which is incorporated in the present application by reference in its entirety.

### Technical Field

The present invention relates to the technical field of communications, and particularly to a method and a controller for implementing a wireless network cloud.

### Background

With the development of communication technologies, logging in the Internet through a wireless network has become very common, and the most frequently used technology is WiFi (wireless fidelity) technology. WiFi is a technology capable of mutually connecting personal computers, handheld devices (such as PDA and mobile phones) and other terminals in a wireless manner, and in the scope of a wireless local area network it means "wireless compatibility authentication", which is essentially is a commercial authentication, and also a wireless networking technology. Networking was carried out by connecting a computer through a network cable previously, and now is implemented through radio waves; a common example is a wireless router, and then networking can be carried out in a WiFi connection mode in the effective range covered by electric waves of the wireless router.

At present, in a WiFi system, an STA (station, which is usually a network adapter, and a terminal used by a WiFi user), an AP (access point), an AC (access controller) and other nodes are at least comprised, wherein wireless transmission is adopted between the STA and the AP, and wired transmission is adopted between the AP and the AC. After connection between the STA and the AP, an IP address and an SSID/VLAN (service set identifier/virtual local area network) pair corresponding to the AP are allocated by the AC, wherein the SSID is equivalent to the name of a local area network, the VLAN is the network segment of a virtual local area network corresponding to the SSID, and the STA can log in the Internet through the IP address.

Problems in the prior art lie in that: 1, on the same terminal, each user will see the same contents while logging in and accessing to a network through the terminal; 2, each user will log in the same network interface and see the same network contents, and cannot access a specific local area network in a partitioning manner, for example, students in different departments within a university will access to the same network pages while logging in a campus network, and partition cannot be carried out according to the identity information of the users such that each student only accesses the website of his own department, and thus partitioned management on "persons" in a wireless system cannot be realized.

### Summary

The main object of the present invention is to provide a technology that enables a user to access a specific local area network in a WiFi system with a specific account name through any terminal in a WiFi network.

In order to achieve the object above, the present application provides a method for implementing a wireless network cloud, comprising generating, according to user identity information pre-entered and stored in a user information table, a bound second network interconnection protocol IP address and second virtual local area network VLAN tag in one-to-one correspondence with the identity information, and further comprising:
acquiring a connection request sent by a wireless terminal, and connecting to the wireless terminal according to the connection request;
allocating a first IP address and a first VLAN tag to the wireless terminal;
receiving user authentication information sent by the wireless terminal through the first IP address, and authenticating the user authentication information according to the user identity information in the user information table;
allocating the second VLAN tag to the wireless terminal when the identity authentication is completed, and allocating the second IP address to the wireless terminal according to a secondary allocation request sent by the wireless terminal when the lease time of the first IP address expires, so that the wireless terminal can perform wireless connection according to the second IP address and the second VLAN.

In the embodiment, through a secondary VLAN tag and IP address allocation strategy, secondary VLAN tag and IP address allocation is carried out after identity authentication of the wireless terminal is completed, thus the secondary VLAN tag and the secondary IP address acquired by the wireless terminal are bound with the personal identity of he wireless terminal, and modification for the original primary VLAN tag and IP address allocation strategy is not involved; acquisition of the same VLAN tag by the wireless terminals with identities belonging to the same group can be realized, and each user can acquire a fixed IP address, thus users having physical addresses that are not on the same LAN but that have a same VLAN tag are enabled to log in the same network corresponding to the VLAN tag through the identity information, and users can log in a WiFi network at any wireless terminal and in any physical local area network, to achieve continuation of data.

The present invention additionally provides a controller for implementing a wireless network cloud, comprising a second allocation information generation unit used for generating, according to user identity information pre-entered and stored in a user information table, a bound second network interconnection protocol IP address and second virtual local area network VLAN tag in one-to-one correspondence with the identity information, and further comprising the following units:
a wireless terminal connection unit used for acquiring a connection request sent by a wireless terminal, and connecting to the wireless terminal according to the connection request;
a first allocation unit used for allocating a first IP address and a first VLAN tag to the wireless terminal;
an identity authentication unit used for receiving user authentication information sent by the wireless terminal through the first IP address, and authenticating the user authentication information according to the user identity information in the user information table;
a second allocation unit used for allocating the second VLAN tag to the wireless terminal when the identity authentication is completed, and allocating the second IP address to the wireless terminal according to a secondary allocation request sent by the wireless terminal when the lease time of the first IP address expires, so that the wireless terminal can perform wireless connection according to the second IP address and the second VLAN.

Through the embodiment of the present invention, the wireless terminal connection unit is connected with the wireless terminal, after the first allocation unit allocates the first IP address and the first VLAN, the identity authentication unit carries out identity authentication on the user according to the user identity information pre-entered and stored in the user information table, and then the second allocation information generation unit generates the second IP address and the second VLAN tag which are bound with the personal identity information of the user, and the second allocation unit allocates the second IP address and the second VLAN tag to the user, thus realizing that in a wireless network, users having physical addresses that are not on the same LAN but that have a same VLAN tag are enabled to log in the same network corresponding to the VLAN tag through the identity information, and users can log in a WiFi network at any wireless terminal and in any physical local area network to achieve continuation of data.

### Brief Description of the Drawings

The accompanying drawings described herein are used for providing further understanding of the present invention, constitute part of the present application, but is not intended to limit the present invention. In the accompanying drawings:
Fig. 1 is a flow diagram of a method for implementing a wireless network cloud of the embodiment I of the present invention;
Fig. 2 is a flow diagram of a method for implementing a wireless network cloud of the embodiment II of the present invention;
Fig. 3 is a structural diagram of a controller for implementing a wireless network cloud of the embodiments of the present invention.

### Detailed Description of the Preferred Embodiments

The technical solution in the embodiments of the present invention will be clearly and completely described below in conjunction with the accompanying drawings in the embodiments of the present invention, and obviously the embodiments described are only part of rather than all of the embodiments of the present invention. Based upon the embodiments in the present invention, all other embodiments obtained by those of ordinary skill in this art without any creative efforts shall fall within the scope of protection of the present invention.

For clearer understanding of the object, technical solution and advantages of the present invention, the present invention is further illustrated below in details in combination with the embodiments and the accompanying drawings. Here, the exemplary embodiments of the present invention and the illustrations thereof are used for explaining the present invention, rather than limiting the present invention.

### Embodiment I

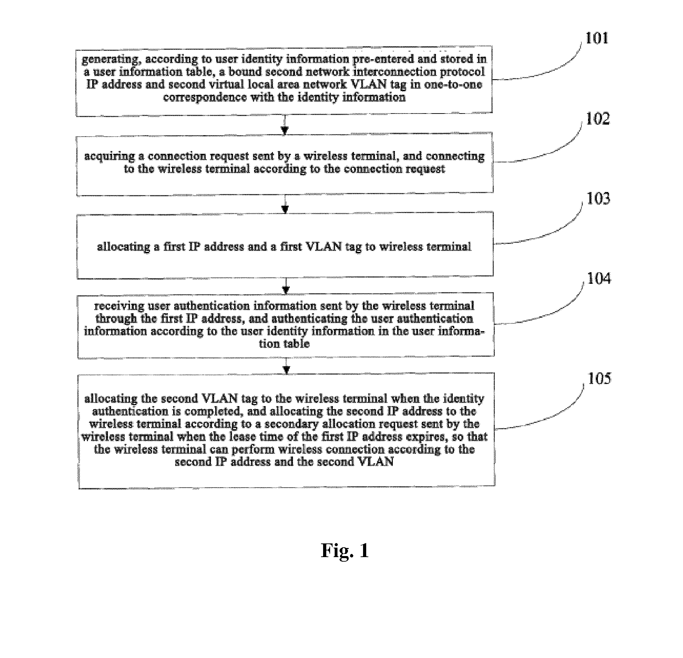

Fig. 1 shows a method for implementing a network cloud of the embodiment I of the present invention, comprising the following steps:
step 101, generating, according to user identity information pre-entered and stored in a user information table, a bound second network interconnection protocol IP address and second virtual local area network VLAN tag in one-to-one correspondence with the identity information.
step 102, acquiring a connection request sent by a wireless terminal, and connecting to the wireless terminal according to the connection request;
step 103, allocating a first IP address and a first VLAN tag for the wireless terminal,
   wherein the lease time of the first IP address is very short, and is generally not more than one minute, that is, the IP address needs to be re-acquired after at most one minute;
step 104, receiving user authentication information sent by the wireless terminal through the first IP address, and authenticating the user authentication information according to the user identity information in the user information table;
step 105, allocating the second VLAN tag to the wireless terminal when the identity authentication is completed, and allocating the second IP address to the wireless terminal according to a secondary allocation request sent by the wireless terminal when the lease time of the first IP address expires, so that the wireless terminal can perform wireless connection according to the second IP address and the second VLAN,
   wherein the lease time of the second IP address is not less than one hour or is permanently valid, so that the user can use the second IP address to access WiFi system resources for a long time.

The technical effects achieved by the embodiments of the present invention are as follows:
in the embodiment I of the present invention, through a secondary VLAN tag and IP address allocation strategy, secondary VLAN tag and IP address allocation is carried out after identity authentication of the wireless terminal is completed, moreover, the lease time of the first IP address is very short, and the lease time of the second IP address is very long and even permanently valid, so that the wireless terminal can rapidly acquire the secondary VLAN tag and the secondary IP address, and moreover, the IP address is a fixed IP bound with the personal identity of the wireless terminal, and modification of the original primary VLAN tag and IP address allocation strategy is not involved, acquisition of the same VLAN tag by the wireless terminals with identities belonging to the same group can be realized, and each user can acquire a fixed IP address, so that users having physical addresses that are not on the same LAN but that have a same VLAN tag are enabled to log in the same network corresponding to the VLAN tag through the identity information, and users can log in a WiFi network at any wireless terminal and in any physical local area network to achieve continuation of data.

### Embodiment II

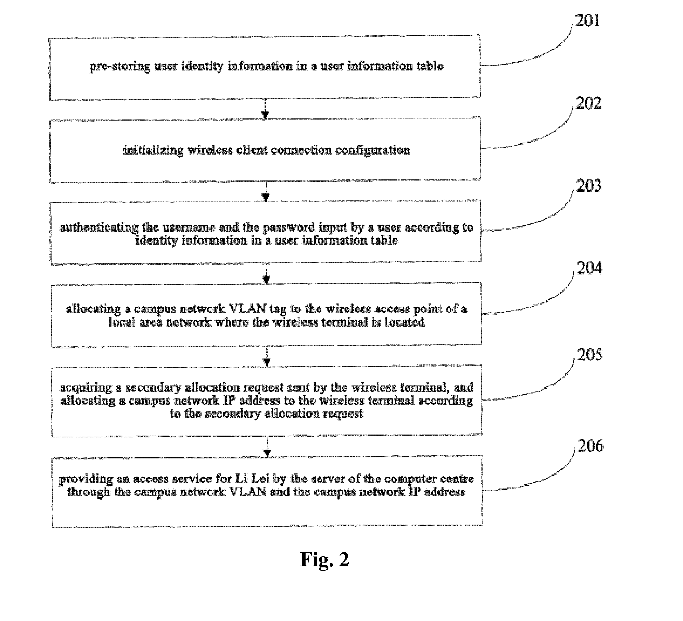

Fig. 2 shows a method for implementing a network cloud of the embodiment II of the present invention, and the present invention is more clearly explained through specific examples.

In a university campus, there are college of business, college of information technology, college of humanities, college of arts, college of life science, college of tourism, college of economics and management, college of mathematics and statistics, college of law, college of accountancy, computer centres and the like. Providing wireless services of a campus network specifically comprise the following steps:
Step 201, pre-storing user identity information in a user information table.

In order to provide the wireless network services of the campus network, the computer centre enters the personal information of each student at first, comprising the name, gender, date of birth, phone number, major, belonged department and the like.

Meanwhile, the computer centre will allocate a fixed VLAN to each college, for example:
the VLAN of the college of business is 101;
the VLAN of the college of information technology is 102;
the VLAN of the computer centre is 200.

A fixed IP address is correspondingly allocated to the students in each college, for example:
the IP address of Li Lei in the college of business is: 10.101.0.11;
the IP address of Han Meimei in the college of information technology is: 10.102.0.22,
the IP address corresponding to each student and the VLAN tag corresponding to the college where the student is enrolled are in one-to-one correspondence with the entered personal information of the student, and stored in the user information table as the user identity information of the student.

For example, two pieces of information stored in the user information table are as follows:
Name: Li Lei
Gender: Male
Date of birth: October 1, 1984
Phone number: 18012345678
Major: business administration
Belonged department: college of business
IP Address: 10.101.0.11
VLAN tag: 101
Username: Leilei
Password: 111111
Permission: freshman boy

Name: Han Meimei
Gender: Female
Date of birth: September 1, 1984
Phone number: 18087654321
Major: computer science and technology
Belonged department: college of information technology
IP address: 10.102.0.22
VLAN tag: 102
Username: Meimei
Password: 222222
Permission: freshman girl

The VLAN tags and the IP addresses above are bound with the personal information of the students, for example, the fixed IP address of Li Lei is always 10.101.0.11, and in the embodiment, in order to facilitate marking and differentiation, the IP addresses and the VLAN tags are referred to as campus network IP addresses and campus network VLAN tags.

Step 202, initializing wireless client connection configuration.

When Li Lei wants to use a notebook computer for accessing to the campus network in his dormitory through WiFi, the notebook computer will automatically acquire a WiFi signal at first, and he selects a mobile network-campus network CMCC-edu within the campus network to connect.

In this case, a wireless access point will automatically allocate a temporary IP address and a temporary VLAN tag, the lease time of the temporary IP is very short, usually one second, generally not greater than one minute.

Usually, the lease time is set to the time needed for carrying out user identification.

Step 203, authenticating the username and the password input by a user according to identity information in a user information table.

After Li Lei selects the CMCC-edu to connect, a system will automatically pop up a dialog box that prompts Li Lei to input a user name and a password, and after Li Lei inputs the user name and the password, a server will retrieve a username which is the same as the username in the user information table, checks whether the password is a correct password after the username is found by search, if so, then the authentication is successful, or else, Li Lei is prompted of failed connection.

For example, if Li Lei inputs: username: Leilei, and password: 111111, then the authentication is successful, and if Li Lei inputs: username: Leilei, and password: 111112, then Li Lei is prompted of wrong password input and failed connection, or Li Lei is prompted of re-input.

When the input of the username is wrong, then Li Lei is directly prompted of wrong username input.

Step 204, allocating a campus network VLAN tag to the wireless access point of a local area network where the wireless terminal is located.

After the authentication is completed, the server immediately allocates the VLAN tag corresponding to the identity information of Li Lei to the wireless access point of the dormitory of Li Lei, that is, the server allocates 101 to the wireless access point of the dormitory of Li Lei.

Step 205, acquiring a secondary allocation request sent by the wireless terminal, and allocating a campus network IP address to the wireless terminal according to the secondary allocation request.

In the step 202, the temporary IP address allocated during initialization for wireless terminal connection configuration will be expired soon due to a very short lease time, the wireless network card of the notebook computer used by Li Lei will immediately request the wireless access point for secondary IP allocation after the expiration, and at this moment, the server will allocate the corresponding campus network IP address to Li Lei, that is, 10.101.0.11. The campus network IP address is a fixed IP address, stored in the server of the computer centre, regardless of a dining hall or a teaching building Li Lei is located, the IP address is used as long as Li Lei logs in the campus network, and naturally, the corresponding campus network VLAN is also fixed.

Since the campus network IP address is not a temporary IP address, the lease time is generally not less than one hour, and may even be set to permanently valid.

Step 206, providing an access service for Li Lei by the server of the computer centre through the campus network VLAN and the campus network IP address.

After the allocation is completed, the wireless terminal will automatically show that the accessing to the campus network is successful, and Li Lei can log in the website of the college of business administration in the campus network.

Because the permission of Li Lei in the user information table is set to freshman boy, Li Lei can only carry out limited operations on the website, for example, a postgraduate examination forum, an employment forum, a renting forum and the like are not opened to freshmen, and Li Lei cannot log in these forums, and some girl columns are not opened for boys, and due to the identity of freshman boy, Li Lei also cannot access these columns.

Correspondingly, Han Meimei can only enter the website of the college of information technology, and cannot enter some boy columns.

Because the campus network IP address is a fixed IP address, the IP address acquired when Li Lei logs in at any wireless access point in the campus network is 10.101.0.11, therefore, if the username "Leilei" and the password "111111" are previously stored in the notebook computer of Li Lei through setting, then automatic authentication connection may be realized when Li Lei switches from one wireless access point area to another wireless access point area, thus achieving continuation of data, for example, when Li Lei is viewing the video of freshmen military training through the campus network, and wants to share the wonderful parts with his friend Wang Hao in the college of biological engineering in the same dormitory building, but the dormitory of Wang Hao already belongs to the range of another wireless access point, a player will continue to download the video after short authentication and connection processes due to the fact that the IP address is still 10.101.0.11, thus the video is continuously played.

The embodiment II of present invention is a specific example of logging in a campus network through a notebook computer, the campus network IP address and the campus network VLAN tag corresponding to the personal information of Li Lei are allocated to Li Lei through the server of the computer centre, thus realizing that each student can only access to the website of his/her own college, and can log in the campus network using the same IP address through different wireless access points, and then realizing continuation of data services.

### Embodiment III

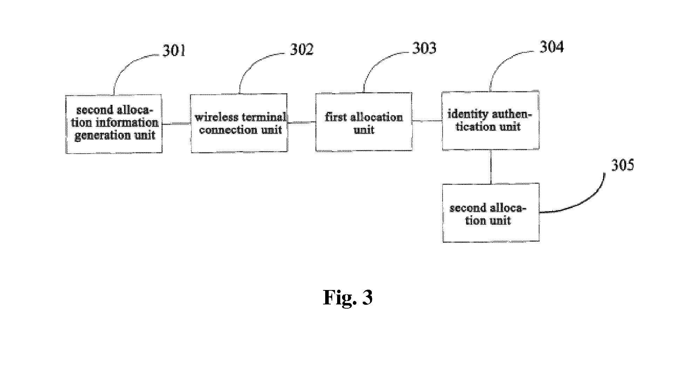

Fig. 3 shows a controller for implementing a wireless network cloud of the embodiments of the present invention, comprising the following units:
a second allocation information generation unit 301 used for generating, according to user identity information pre-entered and stored in a user information table, a bound second network interconnection protocol IP address and second virtual local area network VLAN tag in one-to-one correspondence with the identity information;
a wireless terminal connection unit 302 used for acquiring a connection request sent by a wireless terminal, and connecting to the wireless terminal according to the connection request;
a first allocation unit 303 used for allocating a first IP address and a first VLAN tag to the wireless terminal,
wherein the lease time of the first IP address is very short, for example, one second, and generally not greater than one minute, so that the second IP address continues to be acquired after the end of the lease time;
an identity authentication unit 304 used for receiving user authentication information sent by the wireless terminal through the first IP address, and authenticating the user authentication information according to the user identity information in the user information table;
the working of the unit is completed through transparent transmission;
a second allocation unit 305 used for allocating the second VLAN tag to the wireless terminal when the identity authentication is completed, and allocating the second IP address to the wireless terminal according to a secondary allocation request sent by the wireless terminal when the lease time of the first IP address expires, so that the wireless terminal can perform wireless connection according to the second IP address and the second VLAN,
wherein the lease time of the second IP address is long, for example, five hours, and generally not less than one hour, so as to avoid frequent re-acquiring of the IP address.

The technical benefits brought by the embodiments of the present invention are as follows:
Through the embodiment III of the present invention, the wireless terminal connection unit is connected with the wireless terminal, after the first allocation unit allocates the first IP address and the first VLAN, the identity authentication unit carries out identity authentication on the user according to the user identity information pre-entered and stored in the user information table, and then the second allocation information generation unit generates the second IP address and the second VLAN tag which are bound with the personal identity information, and the second allocation unit allocates the second IP address and the second VLAN tag to the user, so that users having physical addresses that are not on the same local area network but that have a same VLAN tag can log in the same network corresponding to the VLAN tag through the identity information, and users can log in a WiFi network at any wireless terminal and in any physical local area network to achieve continuation of data.

Through descriptions of the embodiments above, those skilled in the art can clearly understand that the present invention may be implemented by hardware or by means of combining software with a necessary universal hardware platform, and on the basis of such understanding, the technical solution of the present invention may be embodied in the form of a software product, and the software product may be stored in a non-volatile storage medium (which may be a CD-ROM, U disk, mobile hard disk and the like), and includes a number of instructions used for enabling one computer device (which may be a personal computer, a server, network equipment or the like) to execute the method according to the various embodiments of the present invention.

In summary, the descriptions above are merely preferred embodiments of the present invention, and are not intended to limit the protection scope of the present invention. Any modifications, equivalent substitutions, improvements and the like made within the spirit and principle of the present invention should fall into the protection scope of the present invention.

## Claims

1. A method for implementing a wireless network cloud, comprising generating, according to user identity information pre-entered and stored in a user information table, a bound second network interconnection protocol IP address and second virtual local area network VLAN tag in one-to-one correspondence with the identity information, and further comprising the following steps:
acquiring a connection request sent by a wireless terminal, and connecting to the wireless terminal according to the connection request;
allocating a first IP address and a first VLAN tag to the wireless terminal;
receiving user authentication information sent by the wireless terminal through the first IP address, and authenticating the user authentication information according to the user identity information in the user information table;
allocating the second VLAN tag to the wireless terminal when the identity authentication is completed, and allocating the second IP address to the wireless terminal according to a secondary allocation request sent by the wireless terminal when the lease time of the first IP address expires, so that the wireless terminal performs wireless connection according to the second IP address and the second VLAN.

2. The method according to claim 1, **characterized in that** the lease time of the first IP address is not greater than one minute.

3. The method according to claim 1, **characterized in that** the lease time of the second IP address is not less than one hour.

4. A controller for implementing a wireless network cloud, comprising a second allocation information generation unit used for generating, according to user identity information pre-entered and stored in a user information table, a bound second network interconnection protocol IP address and second virtual local area network VLAN tag in one-to-one correspondence with the identity information, and further comprising the following units:
a wireless terminal connection unit used for acquiring a connection request sent by a wireless terminal, and connecting to the wireless terminal according to the connection request;
a first allocation unit used for allocating a first IP address and a first VLAN tag to the wireless terminal;
an identity authentication unit used for receiving user authentication information sent by the wireless terminal through the first IP address, and authenticating the user authentication information according to the user identity information in the user information table;
a second allocation unit used for allocating the second VLAN tag to the wireless terminal when the identity authentication is completed, and allocating the second IP address to the wireless terminal according to a secondary allocation request sent by the wireless terminal when the lease time of the first IP address expires, so that the wireless terminal can perform wireless connection according to the second IP address and the second VLAN.

5. The controller according to claim 4, **characterized in that** the lease time of the first IP address is not greater than one minute.

6. The controller according to claim 4, **characterized in that** the lease time of the second IP address is not less than one hour.
